Europäisches Patentamt

European Patent Office

Office européen des brevets

(11) Publication number: **0 198 135**
A2

# EUROPEAN PATENT APPLICATION

(21) Application number: 85304546.6

(22) Date of filing: 26.06.85

(51) Int. Cl.⁴: **G 01 N 21/05**, G 01 N 21/85, G 02 B 6/02

(30) Priority: 17.04.85 US 724782

(43) Date of publication of application: 22.10.86 Bulletin 86/43

(84) Designated Contracting States: DE FR GB IT NL

(71) Applicant: INDIANA UNIVERSITY FOUNDATION, Showalter House P.O. Box 500, Bloomington Indiana 47401 (US)

(72) Inventor: Brown, Daniel J., 441 Halsted Court, Indianapolis Indiana 46224 (US)

(74) Representative: Massey, Alexander et al, MARKS & CLERK Suite 301 Sunlight House Quay Street, Manchester, M3 3JY (GB)

(54) Remote optic atmosphere monitor and method for determining a foreign substance in a fluid.

(57) A device and method for determination of a foreign substance in a fluid. A hollow glass tube is wound through a oval pattern and encapsulated within a solid mass. A plurality of openings extend through the mass transecting the tube at multiple locations along the tube path. A specified light is directed through the tube with the fluid and foreign substance being introduced into the openings. The light exiting the tube is measured with the foreign substance then being determined.

EP 0 198 135 A2

1

# REMOTE OPTIC ATMOSPHERE MONITOR AND METHOD FOR DETERMINING A FOREIGN SUBSTANCE IN A FLUID

## Background of the Invention

Field of the Invention: The present invention relates to the sample chamber, cuvettes or sample cells used in most infrared, ultraviolet or visible wavelength spectrophotometer instruments designed to detect, measure or quantify specific chemical substances.

Description of the Prior Art: Spectrophotometric instrumentation, used for the qualitative and quantitative determination of chemical substances, plays a principle role in the disciplines of medicine, chemistry and physics, as well as in military and industrial applications and a variety of other uses. These instruments have a function based on a phenomenon of nature in which atoms and/or molecules either emit or absorb energy as they change from one energy state to another. The type of energy involved in this process is electromagnetic radiation, that is, light (visible, infrared, ultraviolet), X-rays, radio and radar waves. These are all simply different parts of a broad spectrum that stretches from gamma rays, whose wavelengths are measured in fractions of Angstrom units, to radio waves, whose wavelengths are measured in meters or even kilometers.

When a beam of electromagnetic radiation is passed through a substance, the radiation (energy) can be either absorbed or transmitted, depending upon its frequency and the structure of the molecules it encounters. The energy gained by the molecule in this way may bring about increased vibration or rotation of the atoms, or may raise electrons to higher energy levels. The particular frequency of radiation that a given molecule can absorb depends upon the changes in vibrations or rotation or electron states that are permitted to a molecule of that structure. Each chemical compound, therefore, has a spectrum that is a plot that shows how much electromagnetic radiation is absorbed or transmitted at each frequency. This spectrum is highly characteristic, like a finger print of the chemical compound's structure.

Spectrophotometric instruments of the prior art generally use light as the energy medium for chemical detection. Light of wavelengths between about 4,000 Angstroms and 7,500 Angstroms is visible. Just beyond the red end of the visible spectrum (wavelengths greater than 7,500 Angstroms) lies the infrared region of light. Just beyond the violet end of the visible spectrum (wavelengths of less than 4,000 Angstroms) lies the ultraviolet region of light.

Ultraviolet spectrophotometers commonly used, measure the absorption of light in the visible and "near" ultraviolet region, that is, in the 2,000 to 7,500 Angstrom range. This light is of higher frequency and greater energy than infrared light and when it is absorbed by a molecule, the changes it produces are generally ones that require greater energy, such as changes in electron states.

In a transition to a higher electron level, a molecule can go from any of a number of sub-levels, corresponding to various vibrational and rotational states, to any of a number of other sub-levels. As a result, ultraviolet light absorption bands are broad, and a typical ultraviolet spectrum shows only a few broad humps. Such a spectrum can conveniently be described in terms of the position of the top of the hump (wavelength maximum) and the intensity of that absorption (the extinction coefficient). Thus, the ultraviolet spectrum is used primarily to demonstrate relationships between functional groups (chiefly conjugation) rather than to show the presence of individual functional groups. This, however, provides adequate information for the qualitative and quantitative identification of chemical compounds.

Of all of the properties of a chemical compound, the one that, by itself, gives perhaps the most information about the chemical's structure, is its infrared spectrum. The infrared spectrum helps to reveal the structure of a compound by defining what constituent groups are present in, or absent from, the molecule. A particular group of atoms absorbs light of certain frequencies that are much the same from compound to compound, that is to say, they give rise to characteristic absorption bands. For example, the hydroxyl group (-OH) of alcohols absorbs strongly at 28,000 to 33,000 Angstroms and the methyl group ($-CH_3$) absorbs strongly at 68,000 to 75,000 Angstroms. Therefore, two substances that have identical infrared spectra are, in effect, identical in thousands of different physical properties and must certainly be the same compound.

Interpretation of an infrared spectrum is not a simple

4

matter, but absorption at even a few wavelengths may provide adequate information for qualitative and quantitative identification of chemical compounds.

Spectrophotometric instrumentation of the prior art is generally constructed such that light from a broad spectrum source (conventional incandescent bulb) is separated via prisms or a diffraction grating into discrete wavelengths. The monochromatic light can then be focused and collimated by lenses and mirrors so that the light is passed through some sort of sample chamber where high transparency sample holders (cuvettes or sample cells) containing the chemical substance being analyzed intercept the energy beam. The light passes through the chemical substance and continues on, via lenses and mirrors, to a detector apparatus, such as a photomultiplier tube. The signal generated by the detector apparatus is then amplified electronically and displayed or recorded. By altering the angle of the prisms or the diffraction grating, and by widening or narrowing light path slits, a continuous spectrum of light is passed through the sample. Specific wavelengths absorbed by the chemical substance as it changes energy states are noted by their absence in the recording. Interference from absorbence of the sample holder or any other extraneous source can be factored out by a comparison of the sample beam of light with a reference beam of the same light passed through the same course except for the presence of the chemical substance being analyzed.

Some of the limitations of the usefulness of spectrophotometric instruments has been brought about by the sample cell or cuvette that holds the chemical sample. Since the sample cell must intersect the energy beam of the instrument, the cell has been fixed within the instrument, and this necessitates bringing the chemical sample to the instrument after suitable collection effort and preparation. The size of the sample cell is also limited (typically to a one-centimeter path length) by the space it can occupy within the confines of the instrument, and this can effectively reduce the sensitivity of the analytical determination, especially for gases and vapors. These particular limitations are overcome with the present invention by using fiber optic light-wave guides and hollow tubes with the former acting as the means of carrying the light energy significant distances from the instrument to the chemical sample, and the later as the sample cell, which can have unusually large dimensions.

A traditional approach of determining alcohol content of blood is shown in U.S. Patents 4,057,724, issued to Adrian et al. and 4,090,078, issued to Heim. In these patents, the subject's breath is introduced into a sample chamber through which infrared energy is passed to an infrared detector or measuring instrument, providing a readout of the alcohol content. A further gas analyzer utilizing infrared radiation is disclosed in U.S. Patent 4,180,734, issued to Gedeon and the U.S. Patent 3,562,524, issued to Moore et al. In spite of the above advances, there is yet no atmosphere monitor cell utilizing fiber optics to conveniently, accurately and efficiently direct a source of light through the fluid to be tested for a foreign substance.

In order to maximize the amount of fluid to be tested while minimizing the size of the test cell, I have wound a tube around the cell in multiple layers and then formed test slots extending through the tube. A number of U.S Patents have been granted relating to slotted tubes and a test specimen. For example, the U.S. Patents 3,999,861 and 4,152,075 issued respectively to Bellinger and Rellstab et al show light tubes interrupted by the test specimen; however, both devices have a relative short light path and thus are not capable of detecting either gases which require long light paths or low concentrations of chemicals in solution. Further, the prior art devices typically allow for only a very small sample volume, in the microliter range, and thus, the sensitivity of the instrument is relatively low. In order to increase the sample volume of the prior devices, it would be necessary to vastly increase the size of the device preventing the mounting of the device into the sample well or cuvette holder of the commercially available spectrophotometer instruments. U.S. Patents 3,733,130 and 3,123,066 show probes with a single slot for receiving the test liquid with the light path limited to a relatively short length. The concept of winding the optical guide around an object to increase the test cell is shown in the U.S. Patent 4,443,700 whereas the U.S. Patent 4,200,110 shows covering a probe with an ion permeable membrane envelope; however, neither teach the concept of providing slots or cuts to increase the light-path length or size of the test sample.

The ROAM Cell disclosed herein produces a spectrophotometric cell with extremely long light-path lengths. The importance of this is seen when one realizes that the ability of the cell to detect chemical substances is directly related to the light-path length as described in the Lambert-Beer Law of light absorbence and transmission. Light-path lengths achievable with the ROAM Cell should be able to qualitatively and quantitatively detect chemical substances previously not detectable. The cell is very small and will fit conveniently into the standard cuvette holder located within commercial spectrophotometric instruments.

0198135

7

## Summary of the Invention

One embodiment of the present invention is a device for testing a substance in a fluid comprising a frame, and a hollow light tube to conduct light being mounted in a coiled configuration on the frame and extending through a path, the tube including a plurality of slots extending therethrough allowing the substance to flow therein and change the light directed through the tube.

Another embodiment of the present invention is a test cell for checking a substance in a fluid comprising an elongated hollow light tube which is fixedly mounted in a multiple coiled pattern and including a plurality of openings extending thereacross to receive the substance changing the light directed through the tube.

A further embodiment of the present invention is a remote optical atmosphere monitor cell comprising a plate, a hollow glass tube wound around in a layered pattern, and a solidified mass enclosing the tube and having a plurality of slots extending across and through the tube into which the fluid to be monitored may flow.

It is an object of the present invention to provide a device with minimum size to receive a maximum amount of test sample for the determination of a foreign substance in a fluid.

Yet a further object of the present invention is to provide a new and improved remote optical atmosphere monitor cell.

In addition, it is an object of the present invention to provide a new and improved method for detecting a foreign substance in a fluid.

Further, it is an object of the present invention to provide a fluid monitor which directs a relatively long light path many times through the test sample in order to maximize the amount of test sample under consideration

8

while minimizing the size of the monitor.

Related objects and advantages of the present invention will become apparent from the following description.

## Brief Description of the Drawings

FIG. 1 is a block diagram of the remote optical atmosphere cell (ROAM) connected to a spectrophotometer.

FIG. 2 is a plan view of the ROAM Cell shown in FIG. 1.

FIG. 3 is a cross-sectional view taken along the line 3-3 of FIG. 2 and viewed in the direction of the arrows.

FIG. 4 is an end view of the ROAM Cell of FIG. 2.

FIG. 5 is the same view as FIG. 2 only showing an alternate embodiment of the ROAM Cell.

FIG. 6 shows a fiber optic member, a portion of which is enlarged, for percutaneous injection to monitor substances present in blood.

FIG. 7 is a plan view of the preferred embodiment of the ROAM Cell shown in FIG. 1.

FIG. 8 is a cross-sectional view taken along the line 8-8 of FIG. 7 and viewed in the direction of the arrows.

FIG. 9 is a cross-sectional view taken along the line 9-9 of FIG. 7 and viewed in the direction of the arrows.

FIG. 10 is an enlarged cross-sectional view of the light tube taken along the line 10-10 of Fig 7 and viewed in the direction of the arrows.

10

## Description of the Preferred Embodiments

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

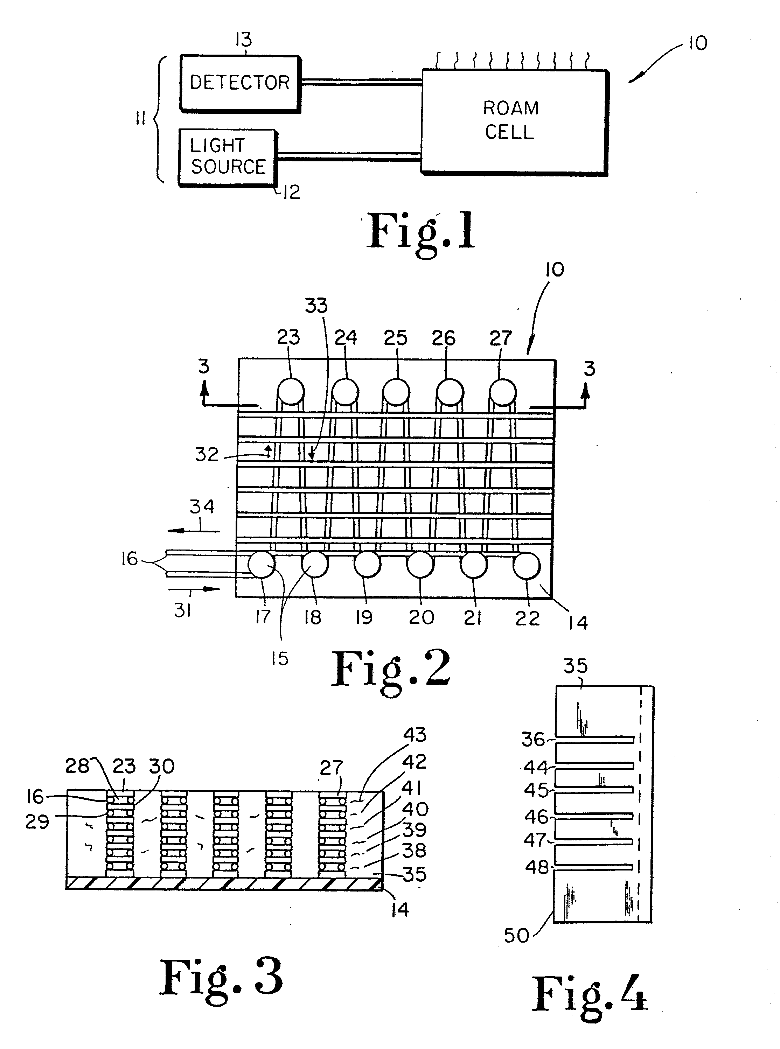

Referring now more particularly to the drawings and to FIG. 1, there is shown a device for testing a foreign substance in a fluid such as a gas. The device includes a remote optical atmosphere monitor (ROAM) cell 10 operably connected to a spectrophotometer 11 including a light source 12 directing light into cell 10 and a detector or comparator 13 for the determination of the amount of light exiting cell 10.

Cell 10 includes a mounting plate 14 (FIG. 2) upon which are fixed a plurality of winding posts 15 or similar structures in appropriate number and spacing to accommodate the anticipated length and size of a fiber optic light-wave guide 16. In the embodiment shown in FIG. 2, six winding posts are cantileveredly mounted along one longitudinally extending edge portion of plate 14 with five additional mounting posts being cantileveredly mounted to the opposite edge portion of the plate and interspaced between the six posts. Thus, posts 17-22 are mounted to one side of plate 14 with posts 23-27 mounted to the opposite side. The winding posts are positioned such that the inside of post 17 aligns with the outside of opposite post 23 which in turn is aligned in similar fashion with post 18 and with the remaining posts aligned in similar fashion.

Each mounting post is identical in configuration and has a series of circular grooves of specific size, number and spacing around its circumference such that the light guide fiber can fit in the groove to maintain alignment and separation. For example, post 23 has a top circumferentially extending groove 28 for receiving light guide 16 with the next lower groove 29 being separated by a plate 30 integral with post 23. Light guide 16 is of conventional fiber optic design being cord configured and wound around each mounting post in sequential fashion. Light guide 16 is first wound around the lower groove of the first mounting post 17 and thus is spaced above plate 14. Guide 16 is bonded to post 17 with a permanent bonding epoxy or similar adhesive. After the adhesive is cured, guide 16 is passed, at the proper tension to maintain a straight axis, to the outside of post 23 and back and forth between each post in a parallel fashion, resting in the bottom groove until reaching the inside bottom of the last post 22. At this point, the light guide 16 is wound around and crosses in front of post 22 and is passed back to the second groove from the bottom of post 17 to repeat the process until all the grooves are filled. The winding of guide 16 on the mounting post can be set to whatever level is required for a specific monitoring function, and when the last level is achieved, the guide is bonded with the permanent bonding adhesive to the top of post 17 exiting the cell in the direction of arrow 34. Thus, a specified amount of light is directed into the cell in the direction of arrow 31 and passes from post 17 to post 23 in the direction of arrow 32, from post 23 to post 18 in the direction of arrow 33 and back and forth until finally exiting the cell in the direction of arrow 34.

Once the light guide 16 is wound around the mounting posts, the guide and mounting posts are encased or

0198135

12

encapsulated within an appropriate material such as a potting compound 35 (FIG. 3) including plastic, resin, etc. An open top embedding box may be used to form compound 35. Such a box is sized to receive plate 14 along with the mounting posts with two holes provided in the box of appropriate size to accommodate guide 16 entering and exiting the cell. The mounting plate 14 with the fiber wound mounting posts 15 are placed into the embedding box such that the entering and exiting wave guide 16 passes through the holes provided in the box. The embedding box is then filled with an appropriate material to embed the wave guide in a solid matrix 35 that is allowed to solidify completely in the configuration shown in FIG. 3. The solid matrix is initially in a flowable state and is poured into the box and subsequently allowed to solidify.

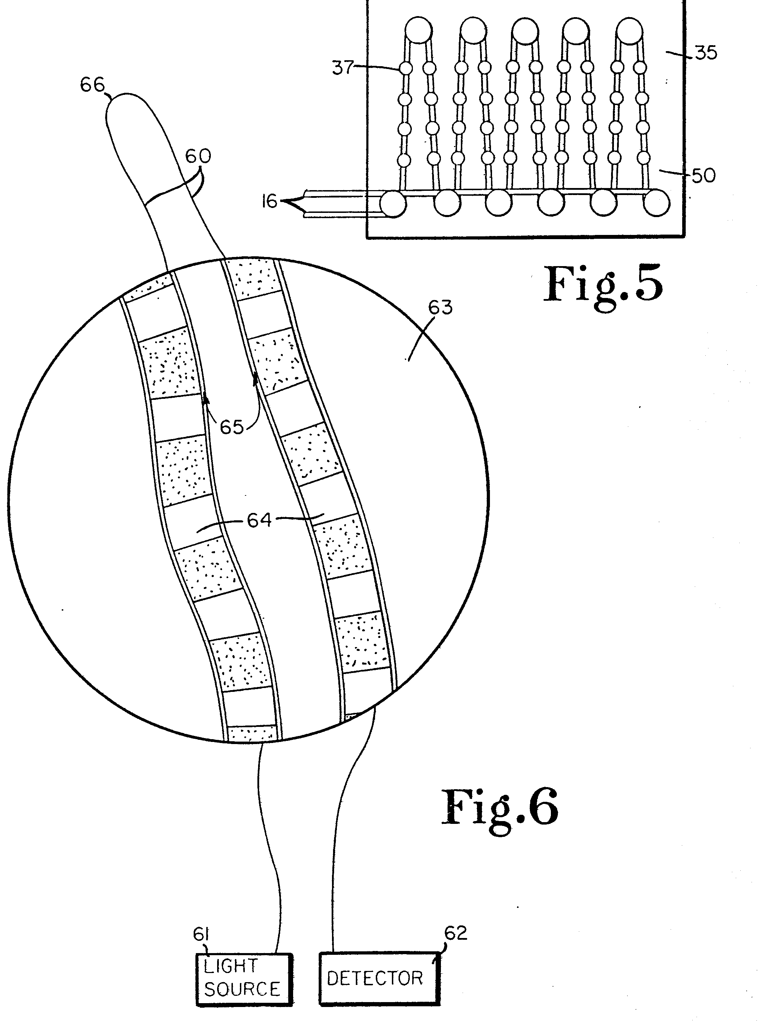

Following matrix solidification, a plurality of slots 36 (FIG. 4) of varying number and dimensions are cut or holes 37 (FIG. 5) are drilled perpendicular to the direction and plane of light guide 16. These slots 36 or holes 37 transect light guide 16 that passes from post to post and creates a gap that separates, or a hole that penetrates, the core of the light guide. Slots 36 and 44-48 are perpendicular to cord 16 as the cord extends back and forth from mounting post to mounting post. The spacing between the slots 36 or holes 37 is selected with consideration being given to optical coupling and spillover, phenomena associated with fiber optic light transmission from fiber to fiber, both of which are functions of the diameter of the fiber core and the numerical aperture of the optical fiber. Generally, this spacing amounts to only a fraction of the core diameter. As seen in FIGS. 4 and 5, by embedding the light guide 16 in the solid matrix 35, the light guide can be cut many times while allowing the fiber axis to remain perfectly aligned. Thus, maximum optical signal coupling across the

13

slots or holes will be realized and will be limited only by spillover, which may be determined from the gap spacing and the numerical aperture of the light guide 16. In the example shown in FIG. 4, the solid matrix 35 is provided with a total of six slots all of which extend downwardly to slightly above plate 14 while cutting the light guide as it extends through a back and forth path between mounting posts. The light guide is wound around the posts to create six different horizontal layers which are cut by the six slots. That is, light guide 16 is arranged in six layers 38-43 (FIG. 3) with each layer being cut by the six slots 36 and 44-48 (FIG. 4).

Following the formation of the slots or holes in the solid matrix, the cut surfaces of light guide 16 are shaped, polished or finished to the appropriate degree in order to obtain maximum optical signal coupling. Commercially available devices, such as prisms, designed to gather or deliver light are fitted to the external ends of light guide 16 in turn attached to the light source 12 and detector apparatus 13.

The ROAM Cell contains no moving parts. It functions, by passing a beam of frequency-modulated, optically-filtered and collimated light of suitable wavelength from sources, such as lasers, conventional lamps or light emitting diodes. These light sources, with the appropriate modulating, filtering and collimating systems, exist in instruments designed to quantify, measure or detect chemical substances via the process of light absorption at specific wavelengths by specific chemical molecular structure. Instruments of this type generally contain fixed cells, chambers or cuvettes that are filled with the chemical of interest, and through which the light energy is passed in order to interact the light with the chemical substance. The ROAM Cell will substitute for or replace these fixed cells or chambers and function at a site remote to the instrument. In this invention, the fiber optic light-wave guide 16 carries the light source from the adapted commercial instrument to the cut surfaces of the slots or holes. A commercially available spectrophotometer which may be utilized with the ROAM Cell is Beckman Model 35, manufactured by Beckman Instrument, Inc., Irvine, California 92713. A spectrophotometer includes a light source of ultraviolet frequency from a Deuterium source such as Beckman Model No. 585699 or a visible light from a Tungsten source such as Beckman Model No. 56333. The optical signal propagating along the guide 16 will couple across the gap of the slot or hole and through the gap fluid media (gas or liquid) which contains the chemical substance to be quantified, measured or detected. The top surface 50 of the solid matrix is positioned to receive the incoming fluid with the foreign substance to be detected. Thus, in the case of detecting gases emitting from the skin of a person, surface 50 is placed in contact with the skin. Because the number of slots, or holes, the dimensions of the gaps, and the length and number of fiber layers are all variable, the path length of light through the slot or hole gap media can be any length practical. Therefore, light absorption in the gap by a specific chemical substance can provide a high degree of detection sensitivity, since this is a function of light path length.

After coupling through the initial slot 48 gap media, the light is carried through the guide 16 to the next slots 47-44 and 36, then around post 23 to recross the slots again. This process can be repeated hundreds of times and since the light path is constructed in series, any light absorption at any single slot gap crossing is additive with any light absorption at any other crossing.

After completing the slot crossings, the light returns via the exit fiber to the detector portion of the instrument being utilized and is appropriately quantified to determine the amount of light absorbed by the specific chemical substance. The amount of light absorbed by the specific chemical substance is directly related to the substance concentration and this concentration can easily be computed and displayed.

The method of detecting a foreign substance in a fluid includes the step of extending the fiber optic cord or hollow light tube through a path and then cutting openings in the cord or tube at multiple locations between its opposite ends. The fluid to be tested is directed into the openings with light passing through the cord or tube, across the openings and through the fluid. The light directed through the cord or tube, openings and fluid is then compared to a standard fluid without the foreign substance being present. As previously explained, certain foreign substances in fluids absorb specific wave-lengths of light energy. Thus, knowing the amount of electromagnetic energy at a specified wavelength directed initially into the ROAM Cell and by measuring the amount of light energy exiting the ROAM Cell at specific wavelengths, it may be easily determined the type and amount of foreign substance within the fluid being measured.

FIG. 6 shows another embodiment of the invention which may be utilized to quantify chemical substances in small spaces, such as blood vessels of the human body. The core of the optical fiber 60 (shown greatly enlarged at location 63) is pierced by laser drill or chemical etching, to produce a series of spaces or gaps 64 along its length, that are perpendicular to the axis of the fiber 60 core. The fiber 16 is then coated with a semi-permeable membrane 65 that allows the passage of water and water soluble chemicals into the gaps 64. Such a semi-permeable membrane is commercially available from Spectrum Medical Industries, Inc., 60916 Terminal Annex, Los Angeles, California 90054 and is a natural cellulose membrane tubing. Specific light wavelengths from the instrumentation source 61 pass through the fiber 60, cross the gaps 64, and are absorbed by the chemical present in the aqueous media that infiltrates from the blood, through the membrane 65 and into the gaps 64. The absorption of the light is noted by the detector apparatus 62 and the concentration of the chemical substance computed and displayed. The fiber 60 is small enough to fit through a hypodermic needle device that allowing continuous monitoring of blood concentrations of chemicals. Fiber 60 is sized to be injected percutaneously into a person with the outer end 66 being folded over as shown in the drawing and injected into the person with the opposite ends being attached to the light source and detector.

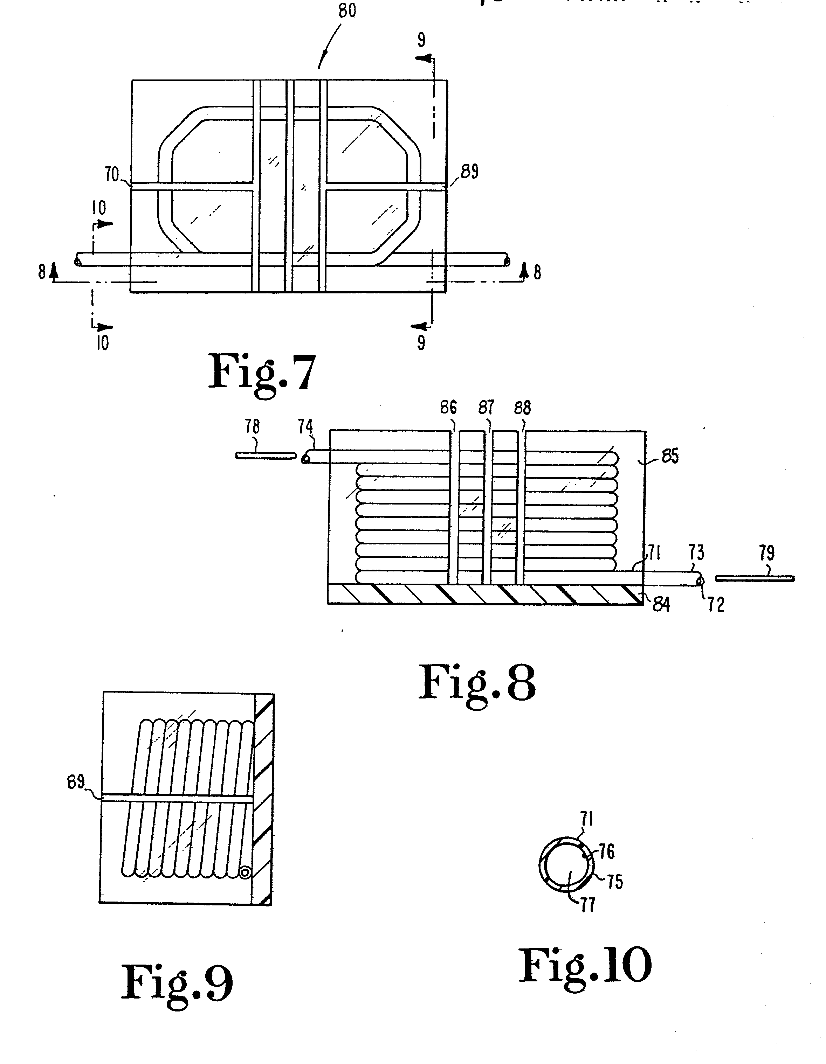

The preferred embodiment of the ROAM Cell is shown in FIGS. 7 through 9. ROAM Cell 80 replaces ROAM Cell 10 shown in FIG. 1 and is connected to the light source 12 and detector 13. ROAM Cell 80 includes a mounting plate 84 upon which is positioned and mounted a solid block of plastic material 85. A hollow glass tube 71 extends through block 85 in an overlapping oval pattern. The tube 71 and block 85 are cut by a plurality of slots 70, 86 through 89 which form a sample test chamber into which the fluid to be tested flows. The light source 12 is connected by a conventional fibre optic cord 79 to the light tube 71. Cord 79 extends into the interior 72 of the entrance end 73 of tube 71 and is attached by conventional means, such as, glue or cement. The hollow interior of tube 71 is provided with a mirror finish to direct the light from cord 79 through the length of the tube 71 eventually exiting the tube via exit end 74 which in turn receives a second fibre optic cord 78 which is connected to the detector 13. Cord 78 is also attached to the tube 71 by cement or other conventional means. Both cord 78 and 79 end once they extend into the hollow tube 71 thereby providing a hollow interior 77 which extends the length of the tube.

Tube 71 is produced from conventional silicate glass and is initially heated and bent to form the four rounded corners of the oval pattern. The outer surface 75 of tube 71 is first placed atop and in contact with the mounting plate and then wound into the first oval pattern until the tube is doubled back upon itself whereat the second oval pattern is formed atop the first oval pattern and so on until at least ten such oval patterns are formed. Once the tube is cooled, the plastic material 85 is poured atop the tube and plate 84 thereby encapsulating the tube and holding same in place. Once the plastic material 85 is cooled, the plurality of slots 70, 86 through 89 are formed with the slots interrupting the tube 71 in a plurality of locations. Slots 86, 87 and 88 extend through the straight side portions of tube 71 and intersect the tube oval pattern along its major axis whereas slot 89 and 70 extend through the straight end portions of tube 71 and intersect the tube oval pattern along its minor axis. Slots 86, 87 and 88 intersect the tube each in two different locations whereas slots 89 and 70 each intersect the tube in only one separate location. Slots 89 and 70 respectively open into slots 88 and 86 thereby maximizing the fluid flow through the slots.

Ten such oval patterns are shown in the drawing although it is understood that the number of oval patterns may vary depending upon the size of the test chamber desired. In the embodiment shown in FIG. 8, the ROAM Cell is 5 cm by 3 cm with a height of 2.5 cm whereas the tube 71 has an inside diameter of 0.25 mm. Thus, the light path in such a cell is approximately one meter with the volume of the sample chamber existing in the slots being approximately 50 microliters. Thus, the cell provides a sample formed by the slots of at least 25 microliters and the glass tube extends through a light path of at least 0.75 meters. The width of slots may vary depending upon the size of chamber desired; however, in one such device, the width of the slots was 0.10 mm. In the embodiment shown in FIG. 7, there are a total of eighty openings or slots extending across tube 71 and thus, the cell includes at least fifty such slots.

It should be noted that the slots interrupt the tube 71 only in the flat or straight portions of the oval pattern. Thus, the light emitted on one side of the slot by tube 71 will be directed entirely into the tube on the opposite side of the slot. Likewise, the mirror surface existing on the cylindrical inner surface 76 of the tube 71 allows for the light to be directed entirely through the four corners of the oval pattern without any of light escaping the light tube 71.

The cylindrical inner surface 76 of tube 71 is provided with a reflective material deposited thereon in a conventional manner to direct the light beam through the tube. Aluminum, or other suitable reflective material, is vacuum heated in a crucible to produce a metallic gas with the gas then allowed to condense onto surface 76. Such a process is described in the 1960 edition of the McGraw-Hill Encyclopedia of Science and Technology.

While the invention has been illustrated and described in detail in the drawings and foregoing description, the same is to be considered as illustrative and not restrictive in character, it being understood that only the preferred embodiments have been shown and described and that all changes and modifications that come within the spirit of the invention are desired to be protected.

CLAIMS:

1. A device for testing a substance in a fluid comprising:
a frame;
a hollow light tube to conduct light being mounted in a coiled configuration on said frame and extending through a path, said tube including a plurality of slots extending therethrough allowing said substance to flow therein and change said light directed through said tube.

2. The device of claim 1 and further comprising:
means mounted to said frame and securing said tube thereto including a channel in communication with said opening allowing said substance to flow therethrough.

3. The device of claim 2 and further comprising light source means connected to one end of said tube and operable to apply a predetermined quantity of light to said one end; and,
light detection means connected to an opposite end of said tube and operable to measure said light exiting said tube.

4. The device of claim 3 wherein said means includes a plurality of slots formed therein which extend transversely through and interrupting said tube at multiple locations allowing said substance to be disposed across and through said tube, said tube including an interior light reflective surface.

5. A test cell for checking a substance in a fluid comprising:
an elongated hollow light tube which is fixedly mounted in a multiple coiled pattern and including a plurality of openings extending thereacross to receive said substance changing the light directed through said tube.

6. The test cell of claim 5 and further comprising encapsulating material holding said tube having a plurality of channels formed therein leading to said plurality of openings.

7. The test cell of claim 6 wherein said tube is wound in an oval path in a fashion which includes straight portions with said channels positioned to extend across and through said tube at multiple locations but only at said straight portions along the length thereof allowing said tube on one side of a channel to be aligned with said tube on the opposite side of a channel.

8. The test cell of claim 7 wherein said portions include a pair of side straight portions and a pair of end straight portions with said slots interrupting said tube at least fifty times.

9. A remote optical atmosphere monitor cell comprising:
a plate;
a hollow glass tube wound around in a layered pattern; and,
a solidified mass enclosing said tube and having a plurality of slots extending across and through said tube into which the fluid to be monitored may flow.

10. The monitor cell of claim 9 wherein said mass is applied to said plate and tube in a flowable state and subsequently hardened.

11. The monitor cell of claim 10 wherein a sufficient number of slots are provided to cooperatively form a sample chamber of at least 25 microliters with said glass tube extending through a light path of at least 0.75 meters.

12. The monitor cell of claim 11 and further comprising:
a light source connected to one end of said glass tube; and,
a light detector connected to an end of said glass tube opposite said one end.

13. The monitor cell of claim 12 and further comprising fibre optic cords connecting said light source and said light detector to said glass tube to allow positioning of said glass tube remotely from said detector.

14. The monitor cell of claim 13 wherein said glass tube extends through a plurality of stacked oval patterns with each oval pattern including a pair of opposite straight side portions and a pair of opposite of straight end portions through which said slots extend.

15. The monitor cell of claim 14 wherein said cords extend into said glass tube and are affixed thereto.

Fig.1

Fig.2

Fig.3

Fig.4

0198135

2/3

Fig.5

Fig.6

Fig.7

Fig.8

Fig.9

Fig.10